(19) **Europäisches Patentamt**
**European Patent Office**
**Office européen des brevets**

(11) **EP 4 685 743 A1**

(12) **EUROPEAN PATENT APPLICATION**
published in accordance with Art. 153(4) EPC

(43) Date of publication:
**28.01.2026 Bulletin 2026/05**

(21) Application number: **23961728.5**

(22) Date of filing: **18.12.2023**

(51) International Patent Classification (IPC):
**G06T 7/246** (2017.01)

(52) Cooperative Patent Classification (CPC):
**G06T 7/246; G06V 10/25; G06V 10/74;**
**G06V 40/10; G06V 40/16**

(86) International application number:
**PCT/CN2023/139399**

(87) International publication number:
**WO 2025/129377 (26.06.2025 Gazette 2025/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Shenzhen Hollyland Technology Co.,**
**Ltd.**
**Shenzhen, Guangdong 518108 (CN)**

(72) Inventors:
• **LIU, Dezhi**
**Shenzhen, Guangdong 518108 (CN)**
• **LIU, Hailin**
**Shenzhen, Guangdong 518108 (CN)**

(74) Representative: **Grünecker Patent- und**
**Rechtsanwälte**
**PartG mbB**
**Leopoldstraße 4**
**80802 München (DE)**

(54) **DEEPSORT-BASED MULTI-OBJECT FACE TRACKING METHOD AND APPARATUS, COMPUTER DEVICE, AND MEDIUM**

(57)    The present disclosure provides a DeepSort-based multi-object face tracking method and apparatus, a computer device, and a medium. The method comprises: performing object detection on a current video frame to obtain a face bounding box set and an upper body bounding box set; by means of a DeepSort algorithm, determining a trajectory corresponding to each upper body bounding box and a predicted upper body bounding box matching the upper body bounding box, wherein an object ID is bound to the trajectory; and on the basis of a positional relationship between face bounding boxes and a specified area in a specified upper body bounding box, determining a face bounding box corresponding to each upper body bounding box, wherein the specified upper body bounding box is an upper body bounding box or a predicted upper body bounding box, and the ID of a face bounding box is an object ID bound to a corresponding trajectory. In the method, a face bounding box is determined by means of an upper body bounding box, so that an object face can be tracked even in scenarios where a face is difficult to detect, such as the face being obscured and the pose change being large, and the continuity of object tracking is improved.

Perform object detection on a current video frame to obtain a face detection box set and an upper body detection box set — S101

For an upper body detection box of the upper body detection box set, determine, by a deep simple online and realtime tracking (DeepSORT) algorithm, a trajectory corresponding to the upper body detection box and a predicted upper body detection box matching the upper body detection box — S102

Determine, based on a positional relationship between each face detection box of the face detection box set and a designated region in a designated upper body detection box, a face detection box corresponding to the upper body detection box — S103

FIG. 1

## Description

## TECHNICAL FIELD

The present disclosure relates to the field of computer vision technologies, in particular to a deep simple online and realtime tracking-based (Deep-SORT-based) multi-object face tracking method and apparatus, a computer device, and a medium.

## BACKGROUND

The object tracking technology is an important branch of computer vision, which has a wide application prospect in video surveillance, visual navigation, human-computer interaction and so on.

In the related art, the multi-object tracking algorithm (deep simple online and realtime tracking (Deep-SORT)) has poor continuity in the scene where it is difficult to detect the face, such as the face is blocked and the face pose changes greatly.

## SUMMARY

To overcome the problems in the related art, the present disclosure provides a DeepSORT-based multi-object face tracking method and apparatus, a computer device, and a medium.

According to a first aspect of the embodiments of the present disclosure, there is provided a deep simple online and realtime tracking-based (DeepSORT-based) multi-object face tracking method, including:

performing object detection on a current video frame to obtain a face detection box set and an upper body detection box set;

for an upper body detection box of the upper body detection box set, determining, by a deep simple online and realtime tracking (DeepSORT) algorithm, a trajectory corresponding to the upper body detection box and a predicted upper body detection box matching the upper body detection box, where an object identity (ID) is bound to the trajectory; and

determining, based on a positional relationship between each face detection box of the face detection box set and a designated region in a designated upper body detection box, a face detection box corresponding to the upper body detection box, where the designated upper body detection box is an upper body detection box of the upper body detection box set or the predicted upper body detection box, and an ID of the face detection box is the object ID bound to the trajectory corresponding to the face detection box.

In an embodiment, determining, based on the positional relationship between each face detection box of the face detection box set and the designated region in the designated upper body detection box, the face detection box corresponding to the upper body detection box includes:

for each face detection box of the face detection box set, in response to all or part of the face detection box being located in the designated upper body detection box, calculating a matching degree between the face detection box and the designated region in the designated upper body detection box, and determining a face detection box with a largest matching degree as the face detection box corresponding to the upper body detection box; and

in response to the face detection box being outside the designated upper body detection box, generating a face detection box in the designated region in the designated upper body detection box, and determining the face detection box generated in the designated region as the face detection box corresponding to the upper body detection box.

In an embodiment, the designated region is determined based on a size of a face detection box in a historical data set and a position of the face detection box in the upper body detection box.

In an embodiment, in the DeepSORT algorithm, after the upper body detection box matching the trajectory is determined, a feature vector corresponding to the trajectory is updated by using a custom confidence-based moving average formula, where the confidence is a confidence of the upper body detection box matching the trajectory.

According to a second aspect of the embodiments of the present disclosure, there is provided a deep simple online and realtime tracking-based (DeepSORT-based) multi-object face tracking apparatus, including:

an object detection module, configured to perform object detection on a current video frame to obtain a face detection box set and an upper body detection box set;

a trajectory determination module, configured to, for an upper body detection box of the upper body detection box set, determine, by a deep simple online and realtime tracking (DeepSORT) algorithm, a trajectory corresponding to the upper body detection box and a predicted upper body detection box matching the upper body detection box, where an object identity (ID) is bound to the trajectory; and

a face determination module, configured to determine, based on a positional relationship between each face detection box of the face detection box set and a designated region in a designated upper body detection box, a face detection box corresponding to the upper body detection box, where the designated upper body detection box is an upper body detection box of the upper body detection box set or the predicted upper body detection box, and an ID of the face detection box is the object ID bound to the trajectory corresponding to the face detection box.

In an embodiment, determining, based on the positional relationship between each face detection box of the face detection box set and the designated region in the designated upper body detection box, the face detection box corresponding to the upper body detection box includes:

for each face detection box of the face detection box set, in response to all or part of the face detection box being located in the designated upper body detection box, calculating a matching degree between the face detection box and the designated region in the designated upper body detection box, and determining a face detection box with a largest matching degree as the face detection box corresponding to the upper body detection box; and
in response to the face detection box being outside the designated upper body detection box, generating a face detection box in the designated region in the designated upper body detection box, and determining the face detection box generated in the designated region as the face detection box corresponding to the upper body detection box.

In an embodiment, the designated region is determined based on a size of a face detection box in a historical data set and a position of the face detection box in the upper body detection box.

In an embodiment, in the DeepSORT algorithm, after the upper body detection box matching the trajectory is determined, a feature vector corresponding to the trajectory is updated by using a custom confidence-based moving average formula, where the confidence is a confidence of the upper body detection box matching the trajectory.

According to a third aspect of the embodiments of the present disclosure, there is provided a computer device, including one or more processors and a machine-readable storage medium, the machine-readable storage medium storing machine-executable instructions executable by the one or more processors, where the machine-executable instructions, when executed by the one or more processors, cause the one or more processors to perform the method according to the first aspect.

According to a fourth aspect of the embodiments of the present disclosure, there is provided a computer-readable storage medium storing computer programs, where the computer programs, when executed by one or more processors, cause the one or more processors to perform the method according to the first aspect.

The technical solution of the present disclosure determines the face detection box corresponding to the upper body detection box by determining the trajectory corresponding to the upper body detection box, and based on the positional relationship between the face detection box and the designated region in the upper body detection box, and associates the ID of the face detection box with the object ID bound to the trajectory matched with the upper body detection box, so that the object face can be tracked even in the scene where it is difficult to detect the face, such as the face is blocked, the pose of the face changes greatly, and the continuity of object tracking is improved.

## BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show only some embodiments of the present disclosure, and a person of ordinary skill in the art may still derive other drawings from these accompanying drawings without inventive efforts.

FIG. 1 is a flowchart illustrating a DeepSORT-based multi-object face tracking method according to an embodiment of the present disclosure.
FIG. 2 is a block diagram illustrating a DeepSORT-based multi-object face tracking apparatus according to an embodiment of the present disclosure.
FIG. 3 is a schematic diagram illustrating a hardware structure of a computer device according to an embodiment of the present disclosure.

## DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

The terms used in the present disclosure are for the purpose of describing a particular example only, and are not intended to limit the present disclosure. The singular forms such as "a," "said," and "the" used in the present disclosure and the appended claims are also intended to include multiple, unless the context clearly indicates otherwise. It will also be understood that as used herein, the term "and/or" is and includes any or all combinations of one or more of the associated listed items.

It is to be understood that although different information may be described using the terms such as "first," "second," "third," etc. in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, as used herein, the wording "if" may be interpreted as "while ..." or "when ..." or "in response to a determination".

For purposes of brevity and ease of understanding, the wordings "greater than" or "less than", "higher than" or "lower than" are used herein to characterize size relationships. However, for those skilled in the art, it will be understood that the wording "greater than" covers the meaning of "greater than or equal to", and the wording "less than" covers the meaning of "less than or equal to". The wording "higher than" covers the meaning of "higher than or equal to", and the wording "lower than" covers the meaning of "lower than or equal to".

In the related art, the multi-object tracking algorithm (DeepSORT) determines the trajectory corresponding to the face detection box for the face of the target person in the video frame, and binds the ID of the face detection box with the trajectory ID, so as to track the target face. However, in the scenarios where the face detection is difficult to detect due to occlusion of face or large changes in face posture, it is difficult to detect the face detection box in the video frame, and it is also difficult to match the face with the trajectory when the target person is still in the video frame, resulting in poor continuity of object tracking.

To address the above-mentioned technical challenges, the present disclosure provides a DeepSORT-based multi-object face tracking method. The method determines the face detection box corresponding to the upper body detection box by determining the trajectory corresponding to the upper body detection box and the predicted upper body detection box matching the upper body detection box, and based on the positional relationship between the face detection box and the designated region in the upper body detection box, and associates the ID of the face detection box with the object ID bound to the trajectory matched with the upper body detection box, so that the object face can be tracked even in the scene where it is difficult to detect the face, such as the face is blocked, the pose of the face changes greatly, and the continuity of object tracking is improved.

Specifically, it will be explained in detail through one or more of the following embodiments.

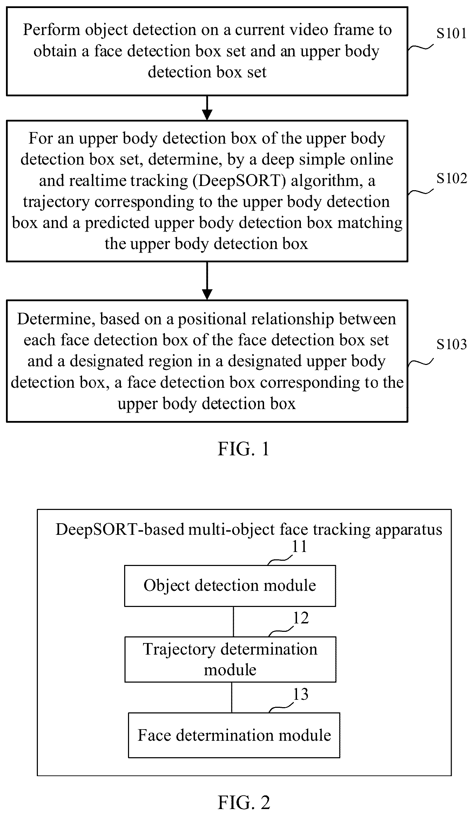

FIG. 1 is a flowchart illustrating a DeepSORT-based multi-object face tracking method according to an embodiment of the present disclosure.

As shown in FIG. 1, the DeepSORT-based multi-object face tracking method may include steps S101 to S103.

At step S101, object detection is performed on a current video frame to obtain a face detection box set and an upper body detection box set.

At step S102, for an upper body detection box of the upper body detection box set, a trajectory corresponding to the upper body detection box and a predicted upper body detection box matching the upper body detection box are determined by a deep simple online and realtime tracking (DeepSORT) algorithm, where an object identity (ID) is bound to the trajectory.

At step S103, a face detection box corresponding to the upper body detection box is determined based on a positional relationship between each face detection box of the face detection box set and a designated region in a designated upper body detection box, where the designated upper body detection box is an upper body detection box of the upper body detection box set or the predicted upper body detection box, and an ID of the face detection box is the object ID bound to the trajectory corresponding to the face detection box.

In this embodiment, the face region of the target person can be determined by the face detection box, and the face region can include a region surrounded by the left ear edge, the right ear edge, the chin and the forehead, and can not include hair, so as to reduce the noise when identifying the key points of the face in the image region of the face detection box. The upper body region of the target person can be determined by the upper body detection box, and the upper body region can include a region above the chest, below the head, and between the shoulders. Of course, the face region and the upper body region can also refer to other regions, which are not limited by the present disclosure.

In this embodiment, the designated upper body detection box can be an upper body detection box, and the corresponding face detection box can be determined by the upper body detection box. Because the face detection box is actually detected in the current video frame, the position of the face detection box determined through the face detection box is more accurate.

In this embodiment, the designated upper body detection box can be a predicted upper body detection box matched with the upper body detection box, and a face detection box corresponding to the upper body detection box can be determined by the predicted face detection box. The trajectory formed by the determined video frames for the face detection box of the same target person is relatively smooth, and the display effect is good.

Because the face detection box is actually detected in the current video frame, and the position of the face detection box determined through the face detection box is more accurate.

In an embodiment, in the step S101, performing the object detection on the current video frame to obtain the face detection box set and the upper body detection box set includes steps S1011 to S1013.

At step S1011: the current video frame is preprocessed.

In this disclosure, the preprocessing includes resolution adjustment, format conversion, and normalization of video frames, which is not limited by the present disclosure.

The resolution adjustment can be achieved based on image scaling algorithms such as bilinear interpolation and bicubic interpolation. The adjusted video frame resolution can be set according to the actual situation, for example, the adjusted video frame resolution can be set according to the requirements of the target detection model for the input image size, or the adjusted video frame resolution can be set according to the actual application scenario. For example, when the target detection model is deployed on a processor with weak performance, the resolution of the input image can be reduced to reduce computational complexity, improve processing efficiency, and appropriately reduce the resolution of the image, which can balance image clarity and processing efficiency. The converted image format can be set according to the format requirements of the input image using the object detection model, for example, the converted image format can be converted to RGB format, and then further normalized, such as shrinking the value of each pixel in the image to a specified range (e.g. [0,1]), to reduce computational complexity and improve processing efficiency.

At step S1012, a plurality of candidate face detection boxes and a plurality of candidate upper body detection boxes of the target person in the preprocessed video frame are detected based on the object detection model.

In this embodiment, the object detection model can be a you only look once (YOLO) model, a region-convolutional neural network (R-CNN) model, a single shot multibox detector (SSD) model, etc., and the present disclosure is not limited to thereto.

In this embodiment, the object detection model can be used to detect video frames including a plurality of target persons. For each target person, a plurality of candidate face detection boxes can be detected to determine the face region of the target person, and a plurality of candidate upper body detection boxes can be detected to determine the upper body region of the target person. The detection box information can include the center coordinates, the length, and the width of the detection box, which are used to characterize the size of the detection box and its position in the target image. The detection box information can also include confidence, which is used to characterize the probability of the presence of the target person in the detection box.

At step S1013, the face detection box and the upper body detection box of each target person are determined from the plurality of candidate face detection boxes and the plurality of candidate upper body detection boxes, and a face detection box set and a upper body detection box set are obtained.

In this embodiment, based on non maximum suppression (NMS) algorithm, for each target person, one face detection box and one upper body detection box can be determined from the plurality of candidate face detection boxes and the plurality of candidate upper body detection boxes corresponding to the target person. Therefore, for a plurality of target tasks, a face detection box set and a upper body detection box set can be obtained.

In an embodiment, in step S102, determining the trajectory corresponding to the upper body detection box and the predicted upper body detection box matching the upper body detection box by the DeepSORT algorithm includes steps S1021 to S1023.

At step S1021, if the current video frame is the first video frame, a corresponding trajectory is established for each upper body detection box in the current video frame.

At step S1022, if the current video frame is not the first video frame, based on the Kalman filtering algorithm, the position in the current video frame of the trajectory corresponding to the upper body detection box of the previous video frame is predicted; and the position can be characterized by the predicted upper body detection box.

At step S1023, the upper body detection box of the current video frame and the predicted upper body detection box are matched based on the Hungarian algorithm to determine the predicted upper body detection box that matches the upper body detection box, and the trajectory corresponding to the upper body detection box is the trajectory corresponding to the predicted upper body detection box.

In this embodiment, the trajectory can be divided into a confirmed trajectory and an unconfirmed trajectory. The trajectory is an unconfirmed trajectory by default when the trajectory is established. The unconfirmed trajectory can be converted to the confirmed trajectory when the corresponding predicted upper body detection box successfully matches the upper body detection box of the video frame three times.

In the process of matching, when there is no confirmed trajectory, the predicted upper body detection box corresponding to the unconfirmed trajectory can be matched with the upper body detection box in the video frame by Intersection over Union (IoU) matching. After the IoU matching, there may be an unconfirmed trajectory that fails to match and an upper body detection box that fails to match. In this case, the unconfirmed trajectory that fails to match can be deleted and a new trajectory corresponding to the upper body detection box that fails to match can be established.

When there is a confirmed trajectory, the predicted upper body detection box corresponding to the confirmed trajectory can be matched with the upper body detection box of the video frame by cascade matching. After the cascade matching, there may be a confirmed trajectory that fails to match, as well as an upper body detection box that fails to match. In this case, the predicted upper body detection boxes corresponding to the confirmed trajectory and unconfirmed trajectory that fails to match can be matched with the upper body detection boxes that fail to match by Intersection over Union (IoU) matching. After the IoU matching, there may still be a confirmed trajectory that fails to match. When the number of consecutive unsuccessful matches exceeds a specified threshold, the confirmed trajectory can be deleted.

In an embodiment, when the number of consecutive unsuccessful matches of the confirmed trajectory does not exceed a specified threshold (e.g. three times), the designated upper body detection box can be the predicted upper body detection box corresponding to the unsuccessful matched confirmed trajectory. That is, in the current video frame, if there is no predicted upper body detection box matching the upper body detection box, in some video frames where there is a target object but its upper body detection box is not detected properly, the corresponding predicted upper body detection box can also be used to determine the face detection box. Setting a specified threshold can also avoid the situation where too many video frames do not have the target object but still determine the face detection box through its corresponding predicted upper body detection box. This can improve the continuity of target tracking while ensuring the accuracy of target tracking.

In the process of cascade matching, it is necessary to obtain the feature vector of each upper body detection box in the video frame, calculate the similarity between each feature vector and the feature vector corresponding to the trajectory, ensure that the upper body detection box corresponding to the feature vector with the largest similarity and exceeding the specified threshold is successfully matched with the trajectory, and update the feature vector corresponding to the trajectory.

In an embodiment, a custom confidence based moving average formula can be used to update the feature vector corresponding to the trajectory. The formula can be:

$$f_{n+1} = (1 - c_{n+1}) * f_n + c_{n+1} * d_{n+1}.$$

Where $f_{n+1}$ represents the feature vector corresponding to the trajectory in the $(n+1)^{th}$ video frame, $c_{n+1}$ represents the confidence of the upper body detection box matched with the trajectory in the $(n+1)^{th}$ video frame, $f_n$ represents the feature vector corresponding to the trajectory in the $n^{th}$ video frame and $d_{n+1}$ represents the feature vector of the upper body detection box matched with the trajectory in the $(n+1)^{th}$ video frame, and n is a natural number.

In this embodiment, the confidence of the upper body detection box can be determined based on the object detection model during the process of object detection on video frames. The appearance features of the upper body detection box can be extracted through a feature extraction network to determine the feature vector of the upper body detection box.

The DeepSort algorithm in related art directly uses the feature vector of the currently successfully matched face detection box as the feature vector corresponding to the trajectory. This embodiment updates the feature vector of the trajectory based on the feature vector of the upper body detection box. Compared with the face detection box, the upper body detection box includes abundant information and can improve the accuracy of matching. This embodiment updates the feature vector corresponding to the trajectory by using a custom confidence based moving average formula after determining the upper body detection box that matches the trajectory, so that the feature vector corresponding to the trajectory integrates the feature vectors of all upper body detection boxes that have been successfully matched in history. Therefore, when matching the trajectory with the upper body detection box based on the feature vector, compared to the trajectory feature vector that only includes the feature vector of the most recently matched face detection box in related art, using the trajectory feature vector updated by the confidence based moving average formula disclosed in the present disclosure can significantly reduce the number of ID switches and further improve the matching accuracy in complex background interference and situations where the person is occluded.

In an embodiment, in the step S103, determining, based on the positional relationship between each face detection box of the face detection box set and the designated region in the designated upper body detection box, the face detection box corresponding to the upper body detection box includes the following steps S1031 and S1032.

At step S1031, for each face detection box of the face detection box set, in response to all or part of the face detection box being located in the designated upper body detection box, a matching degree between the face detection box and the designated region in the designated upper body detection box is calculated, and a face detection box with a largest matching degree as the face detection box corresponding to the upper body detection box is determined.

In this embodiment, the IoU matching can be performed between the face detection box and the designated region in the designated upper body detection box, and the overlap rate between the face detection box and the designated region is taken as the matching degree.

At step S1032, in response to the face detection box being outside the designated upper body detection box, a face detection box is generated in the designated region in the designated upper body detection box, and the face detection box generated in the designated region is determined as the face detection box corresponding to the upper body detection box.

In this embodiment, the size and the position of the designated region in the upper body detection box can be determined based on the size of the face detection box in the historical dataset and the position of the face detection box in the upper body detection box. For example, the historical dataset can include a plurality of images of face detection boxes and upper body detection boxes of a person. The size of the face detection boxes and their distribution positions in the upper body detection boxes are statistically analyzed. The size of the face detection box with the highest frequency of occurrence, or the average size of the face detection box is used as the size of the designated region. The distribution position or average distribution position of the face detection box with the highest frequency of occurrence in the upper body detection box is used as the position of the designated region.

In this embodiment, it is first determined whether there is a complete face detection box within the region of the designated upper body detection box, when there is the complete face detection box, it can be determined that the complete face detection box with the highest matching degree is the face detection box corresponding to the upper body detection box; when there is no complete face detection box, it can be further determined whether there is a partial face detection box within the region of the designated upper body detection box, when there is the partial face detection box, it can be determined that the face detection box with the highest matching degree is the face detection box corresponding to the upper body detection box, when there is no partial face detection box, a face detection box can be further generated in the designated region of the upper body detection box to be determined as the face detection box corresponding to the upper body detection box.

This embodiment determines the face detection box with the highest matching degree as the face detection box corresponding to the upper body detection box when all or part of the face detection box is located within the designated range of the upper body detection box. When the region of the face detection box is outside the designated range of the upper body detection box, a face detection box is generated in the designated region and determined as the face detection box corresponding to the upper body detection box. Therefore, in the case where a face detection box exists within the designated range of the upper body detection box, the face detection box that matches the upper body detection box can be accurately determined. In the case where there is no face detection box within the designated range of the upper body detection box, a corresponding face detection box can also be generated, so that when the face is occluded or the face pose is large, a face detection box can be generated. In scenarios where it is difficult to detect faces, it is also possible to determine the face detection box based on the upper body detection box, and associate the ID of the face detection box with the target ID bound to the trajectory that matches the upper body detection box, improving the continuity of target tracking.

FIG. 2 is a block diagram illustrating a Deep-SORT-based multi-object face tracking apparatus according to an embodiment of the present disclosure.

The DeepSORT-based multi-object face tracking apparatus includes an object detection module 11, a trajectory determination module 12, and a face determination module 13.

The object detection module 11 is configured to perform object detection on a current video frame to obtain a face detection box set and an upper body detection box set.

The trajectory determination module 12 is configured to, for an upper body detection box of the upper body detection box set, determine, by a deep simple online and realtime tracking (DeepSORT) algorithm, a trajectory corresponding to the upper body detection box and a predicted upper body detection box matching the upper body detection box, where an object identity (ID) is bound to the trajectory.

The face determination module 13 is configured to: determine, based on a positional relationship between each face detection box of the face detection box set and a designated region in a designated upper body detection box, a face detection box corresponding to the upper body detection box, where the designated upper body detection box is an upper body detection box of the upper body detection box set or the predicted upper body detection box, and an ID of the face detection box is the object ID bound to the trajectory corresponding to the face detection box.

In an embodiment, in the face determination module 13, determining, based on the positional relationship between each face detection box of the face detection box set and the designated region in the designated upper body detection box, the face detection box corresponding to the upper body detection box includes:

for each face detection box of the face detection box set, in response to all or part of the face detection box being located in the designated upper body detection box, calculating a matching degree between the face detection box and the designated region in the designated upper body detection box, and determining a face detection box with a largest matching degree as the face detection box corresponding to the upper body detection box; and

in response to the face detection box being outside the designated upper body detection box, generating a face detection box in the designated region in the designated upper body detection box, and determining the face detection box generated in the designated region as the face detection box corresponding to the upper body detection box.

In an embodiment, the designated region is determined based on a size of a face detection box in a historical data set and a position of the face detection box in the upper body detection box.

In an embodiment, in the DeepSORT algorithm, after the upper body detection box matching the trajectory is determined, a feature vector corresponding to the trajectory is updated by using a custom confidence-based moving average formula, where the confidence is a confidence of the upper body detection box matching the trajectory.

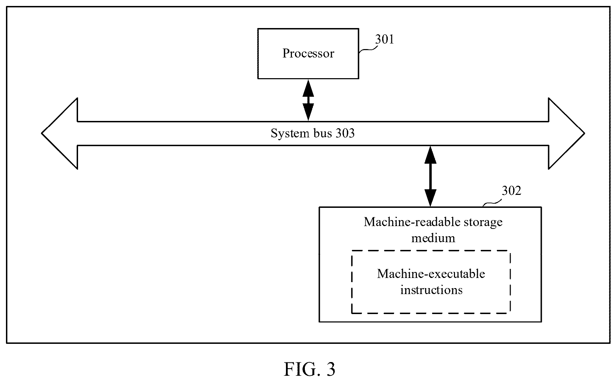

FIG. 3 is a schematic diagram illustrating a hardware structure of a computer device according to an embodiment of the present disclosure. The computer device may include a processor 301 and a machine-readable storage medium 302 storing machine executable instructions. The processor 301 and the machine readable storage medium 302 communicate with each other via a system bus 303. By reading and executing the machine executable instructions corresponding to the logic of DeepSort based multi-target face tracking in the machine-readable storage medium 302, the processor 301 can execute the DeepSORT-based multi-object face tracking method.

The machine-readable storage medium 302 mentioned herein may be any of electronic, magnetic, optical, or other physical storage devices and may contain or store information such as executable instructions, data, etc. For example, the machine-readable storage medium may be a volatile memory, a non-volatile memory, or a similar storage medium. A volatile memory can be a random access memory (RAM), while a non-volatile memory can be a flash memory, a storage drive (such as a hard drive), a solid-state drive, a storage disk (such as a compact disc (CD), a digital versatile disc (DVD)).

Based on any of the methods described in the above embodiments, the embodiments of the present disclosure also provide a computer-readable storage medium, which stores computer programs. The computer programs, when executed by one or more processor, cause the one or more processor to perform the method described in any of the above embodiments.

The systems, devices, modules or units illustrated in the above embodiments can be implemented specifically by a computer chip or entity, or by a product with a certain functionality. A typical implementation device is a computer, and the specific form of the computer can be a personal computer, a laptop computer, a cellular phone, a camera phone, a smart phone, a personal digital assistant, a media player, a navigation device, an e-mail sending and receiving device, a game console, a tablet computer, a wearable device or a combination of any of these devices.

It should also be noted that the terms "including", "including" or any other variation are intended to cover non-exclusive inclusion, so that a process, a method, a product or a device that includes a series of elements includes not only those elements, but also includes other elements that are not explicitly listed, or elements that are inherent to such process, method, product, or device. Without further limitation, elements defined by the statement "including a ......" do not preclude the existence of additional identical elements in the process, method, production or device including the elements.

Specific embodiments of the present disclosure are described above. Other implementations are within the scope of the following claims. In some cases, the actions or steps recited in the claims may be performed in a different order than in the embodiments and the desired result may still be achieved. In addition, the processes depicted in the drawings do not necessarily require the particular sequence or successive sequences shown in order to achieve the desired results. In some embodiments, multitasking and parallel processing are also possible or may be advantageous.

Where "a specific example" or "some examples" are intended to refer to that a specific feature, structure, material, or characteristic described in combination with an embodiment or an example are included in at least one embodiment or example of the present disclosure. In the present specification, the illustrative expressions of the above terms do not necessarily refer to a same embodiment or example. Further, specific feature, structure, material or characteristic described above may be combined in a proper way in one or more embodiments or examples.

After considering the specification and practicing the present disclosure, those skilled in the art would easily conceive of other implementations of the present disclosure. The present disclosure is intended to cover any variations, uses, modification or adaptations of the present disclosure that follow the general principles thereof and include common knowledge or conventional technical means in the art that are not disclosed in the present disclosure. The specification and examples are considered as exemplary only, with a true scope and spirit of the present disclosure being indicated by the following claims.

It is to be understood that the present disclosure is not limited to the precise construction described herein and shown in the drawings, and that various modifications and changes may be made without departing from the scope thereof. The scope of the disclosure is to be limited only by the appended claims.

The above description is only preferred examples of the present disclosure, and is not intended to limit the disclosure, and any modifications, equivalents, improvements, etc., which are made within the spirit and principles of the present disclosure, should be included scope of the present disclosure.

## Claims

1. A deep simple online and realtime tracking-based (DeepSORT-based) multi-object face tracking method, comprising:

   performing object detection on a current video frame to obtain a face detection box set and an upper body detection box set;

for an upper body detection box of the upper body detection box set, determining, by a deep simple online and realtime tracking (Deep-SORT) algorithm, a trajectory corresponding to the upper body detection box and a predicted upper body detection box matching the upper body detection box, wherein an object identity (ID) is bound to the trajectory; and

determining, based on a positional relationship between each face detection box of the face detection box set and a designated region in a designated upper body detection box, a face detection box corresponding to the upper body detection box, wherein the designated upper body detection box is an upper body detection box of the upper body detection box set or the predicted upper body detection box, and an ID of the face detection box is the object ID bound to the trajectory corresponding to the face detection box.

2. The method of claim 1, wherein determining, based on the positional relationship between each face detection box of the face detection box set and the designated region in the designated upper body detection box, the face detection box corresponding to the upper body detection box comprises:

for each face detection box of the face detection box set, in response to all or part of the face detection box being located in the designated upper body detection box, calculating a matching degree between the face detection box and the designated region in the designated upper body detection box, and determining a face detection box with a largest matching degree as the face detection box corresponding to the upper body detection box; and

in response to the face detection box being outside the designated upper body detection box, generating a face detection box in the designated region in the designated upper body detection box, and determining the face detection box generated in the designated region as the face detection box corresponding to the upper body detection box.

3. The method of claim 1, wherein the designated region is determined based on a size of a face detection box in a historical data set and a position of the face detection box in the upper body detection box.

4. The method of claim 1, wherein in the DeepSORT algorithm, after the upper body detection box matching the trajectory is determined, a feature vector corresponding to the trajectory is updated by using a custom confidence-based moving average formula, where the confidence is a confidence of the upper body detection box matching the trajectory.

5. A deep simple online and realtime tracking-based (DeepSORT-based) multi-object face tracking apparatus, comprising:

an object detection module, configured to perform object detection on a current video frame to obtain a face detection box set and an upper body detection box set;

a trajectory determination module, configured to, for an upper body detection box of the upper body detection box set, determine, by a deep simple online and realtime tracking (Deep-SORT) algorithm, a trajectory corresponding to the upper body detection box and a predicted upper body detection box matching the upper body detection box, wherein an object identity (ID) is bound to the trajectory; and

a face determination module, configured to determine, based on a positional relationship between each face detection box of the face detection box set and a designated region in a designated upper body detection box, a face detection box corresponding to the upper body detection box, wherein the designated upper body detection box is an upper body detection box of the upper body detection box set or the predicted upper body detection box, and an ID of the face detection box is the object ID bound to the trajectory corresponding to the face detection box.

6. The apparatus of claim 5, wherein determining, based on the positional relationship between each face detection box of the face detection box set and the designated region in the designated upper body detection box, the face detection box corresponding to the upper body detection box comprises:

for each face detection box of the face detection box set, in response to all or part of the face detection box being located in the designated upper body detection box, calculating a matching degree between the face detection box and the designated region in the designated upper body detection box, and determining a face detection box with a largest matching degree as the face detection box corresponding to the upper body detection box; and

in response to the face detection box being outside the designated upper body detection box, generating a face detection box in the designated region in the designated upper body detection box, and determining the face detection box generated in the designated region as the face detection box corresponding to the upper body detection box.

7. The apparatus of claim 5, wherein the designated region is determined based on a size of a face detection box in a historical data set and a position of the face detection box in the upper body detection box.

8. The apparatus of claim 5, wherein in the DeepSORT algorithm, after the upper body detection box matching the trajectory is determined, a feature vector corresponding to the trajectory is updated by using a custom confidence-based moving average formula, where the confidence is a confidence of the upper body detection box matching the trajectory.

9. A computer device, comprising one or more processors and a machine-readable storage medium, the machine-readable storage medium storing machine-executable instructions executable by the one or more processors, wherein the machine-executable instructions, when executed by the one or more processors, cause the one or more processors to perform the method of any one of claims 1 to 4.

10. A computer-readable storage medium, storing computer programs thereon, wherein the computer programs, when executed by one or more processors, cause the one or more processors to perform the method of any one of claims 1 to 4.

Perform object detection on a current video frame to obtain a face detection box set and an upper body detection box set ~ S101

For an upper body detection box of the upper body detection box set, determine, by a deep simple online and realtime tracking (DeepSORT) algorithm, a trajectory corresponding to the upper body detection box and a predicted upper body detection box matching the upper body detection box ~ S102

Determine, based on a positional relationship between each face detection box of the face detection box set and a designated region in a designated upper body detection box, a face detection box corresponding to the upper body detection box ~ S103

FIG. 1

DeepSORT-based multi-object face tracking apparatus

11

Object detection module

12

Trajectory determination module

13

Face determination module

FIG. 2

FIG. 3

## INTERNATIONAL SEARCH REPORT

| International application No. |
|---|
| **PCT/CN2023/139399** |

### A. CLASSIFICATION OF SUBJECT MATTER

G06T 7/246(2017.01)i

According to International Patent Classification (IPC) or to both national classification and IPC

### B. FIELDS SEARCHED

Minimum documentation searched (classification system followed by classification symbols)

G06T.G06V

Documentation searched other than minimum documentation to the extent that such documents are included in the fields searched

Electronic data base consulted during the international search (name of data base and, where practicable, search terms used)

VEN. CNABS. CNTXT, WOTXT, EPTXT, USTXT, CNKI, IEEE: 人脸, 检测, 跟踪, 框, 轨迹, 半身, 头, 肩, 身体, 胸, 区域, 位置, 预测, 遮挡, DeepSort, face, detection, trace, track, body, frame, predict, bound, target

### C. DOCUMENTS CONSIDERED TO BE RELEVANT

| Category* | Citation of document, with indication, where appropriate, of the relevant passages | Relevant to claim No. |
|---|---|---|
| A | CN 111797652 A (CANON INC.) 20 October 2020 (2020-10-20) description, paragraphs 28-73 | 1-10 |
| A | CN 114419480 A (XIAMEN ZHIXIAOJIN INTELLIGENT TECHNOLOGY CO., LTD.) 29 April 2022 (2022-04-29) description, paragraphs 57-90 | 1-10 |
| A | CN 112037247 A (ZHEJIANG DAHUA TECHNOLOGY CO., LTD.) 04 December 2020 (2020-12-04) entire document | 1-10 |
| A | CN 108875488 A (BEIJING KUANGSHI TECHNOLOGY CO., LTD. et al.) 23 November 2018 (2018-11-23) entire document | 1-10 |
| A | CN 110427905 A (BEIJING BAIDU NETCOM SCIENCE AND TECHNOLOGY CO., LTD.) 08 November 2019 (2019-11-08) entire document | 1-10 |
| A | US 2023326040 A1 (CANON KABUSHIKI KAISHA) 12 October 2023 (2023-10-12) entire document | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2024** | **19 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/139399** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020082549 A1 (APPLE INC.) 12 March 2020 (2020-03-12)<br>entire document | 1-10 |

Form PCT/ISA/210 (second sheet) (July 2022)

**INTERNATIONAL SEARCH REPORT**
**Information on patent family members**

International application No.

**PCT/CN2023/139399**

| Patent document cited in search report | | | Publication date (day/month/year) | Patent family member(s) | | | Publication date (day/month/year) |
|---|---|---|---|---|---|---|---|
| CN | 111797652 | A | 20 October 2020 | None | | | |
| CN | 114419480 | A | 29 April 2022 | None | | | |
| CN | 112037247 | A | 04 December 2020 | None | | | |
| CN | 108875488 | A | 23 November 2018 | None | | | |
| CN | 110427905 | A | 08 November 2019 | None | | | |
| US | 2023326040 | A1 | 12 October 2023 | JP | 2023154970 | A | 20 October 2023 |
| | | | | CN | 116894853 | A | 17 October 2023 |
| US | 2020082549 | A1 | 12 March 2020 | US | 11010905 | B2 | 18 May 2021 |

Form PCT/ISA/210 (patent family annex) (July 2022)